# NEW EUROPEAN PATENT SPECIFICATION

(11) **EP 2 758 168 B2**
(45) Date of publication and mention of the opposition decision: **16.11.2022**
(45) Mention of the grant of the patent: 31.07.2019
(21) Application number: 12833838.1
(22) Date of filing: 21.09.2012
(51) Int. Cl.: B01J 23/44, B01J 23/42, B01J 37/025

(54) **DIESEL OXIDATION CATALYST WITH LAYERED STRUCTURE CONTAINING CERIA COMPOSITION AS PALLADIUM SUPPORT MATERIAL FOR ENHANCED HC AND CO GAS CONVERSION**
DIESELOXIDATIONSKATALYSATOR MIT SCHICHTSTRUKTUR MIT ZEROXIDZUSAMMENSETZUNG ALS PALLADIUMTRÄGERMATERIAL FÜR VERBESSERTE HC- UND CO-GASUMWANDLUNG
CATALYSEUR D'OXYDATION DIESEL À STRUCTURE EN COUCHES, CONTENANT UNE COMPOSITION D'OXYDE DE CÉRIUM COMME MATÉRIAU DE SUPPORT DE PALLADIUM POUR CONVERSION DE GAZ HC ET CO AMÉLIORÉE

(30) Priority: 23.09.2011 EP 11182585
(43) Date of publication of application: 30.07.2014
(73) Proprietor: BASF SE, 67056 Ludwigshafen am Rhein (DE); BASF Corporation, Florham Park, NJ 07932 (US)
(72) Inventor: GRUBERT, Gerd, 30161 Hannover (DE); NEUBAUER, Torsten, 30853 Lengenhagen (DE); PUNKE, Alfred, 38179 Walle (DE); HILGENDORFF, Marcus, 30539 Hannover (DE); MÜLLER-STACH, Torsten, 30163 Hannover (DE); GERLACH, Olga, 67071 Ludwigshafen (DE); WEI, Xinyi, Princeton, New Jersey 08540 (US); HOKE, Jeffrey, North Brunswick, New Jersey 08902 (US); SUNG, Shiang, New York, New York 10128 (US); ROTH, Stanley, Yardley, Pennsylvania 19067 (US)
(74) Representative: Altmann Stößel Dick Patentanwälte PartG mbB
(86) International application number: PCT/IB2012/055030
(87) International publication number: WO 2013/042080

(56) References cited:
- EP-A2- 1 985 352
- WO-A1-93/10885
- WO-A1-2008/047170
- WO-A2-2010/008355
- WO-A2-2010/077843
- WO-A2-2010/083313
- WO-A2-2012/071421
- CN-A- 1 277 892
- JP-A- H02 265 648
- US-A1- 2008 045 405
- "Chapter 2" In: RONALD M. HECK et al.: "Catalytic Air Pollution Control - Commercial Technology", 2009, Wiley ISBN: 978-0-470-27503 -0 pages 24-40,

## Description

### Technical Field

The present invention relates to a layered oxidation catalyst, in particular for the treatment of diesel engine exhaust, containing ceria as palladium support material.

### Background

Operation of lean burn engines, e.g. diesel engines and lean burn gasoline engines, provide the user with excellent fuel economy, and have very low emissions of gas phase hydrocarbons and carbon monoxide due to their operation at high air/fuel ratios under fuel lean conditions. Diesel engines, in particular, also offer significant advantages over gasoline engines in terms of their fuel economy, durability, and their ability to generate high torque at low speed. From the standpoint of emissions, however, diesel engines present problems more severe than their spark-ignition counterparts. Emission problems relate to particulate matter (PM), nitrogen oxides (NOx), unburned hydrocarbons (HC) and carbon monoxide (CO). NOx is a term used to describe various chemical species of nitrogen oxides, including nitrogen monoxide (NO) and nitrogen dioxide (NO₂), among others.

Oxidation catalysts comprising precious metals such as platinum group metals (PGM) dispersed on a refractory metal oxide support are known for use in treating the exhaust of diesel engines in order to convert both hydrocarbon and carbon monoxide gaseous pollutants by catalyzing the oxidation of these pollutants to carbon dioxide and water. Such catalysts have been generally contained in units called diesel oxidation catalysts (DOC), or more simply catalytic converters, which are placed in the exhaust flow path from a diesel powered engine to treat the exhaust before it vents to the atmosphere. Typically, the diesel oxidation catalysts are formed on ceramic or metallic substrate carriers upon which one or more catalyst coating compositions are deposited. In addition to the conversions of gaseous HC, CO and the soluble organic fraction (SOF) of particulate matter, oxidation catalysts containing platinum group metals dispersed on a refractory oxide support promote the oxidation of nitric oxide (NO) to nitric dioxide (NO₂).

As is well-known in the art, catalysts used to treat the exhaust of internal combustion engines are less effective during periods of relatively low temperature operation, such as the initial cold-start period of engine operation, because the engine exhaust is not at a temperature sufficiently high for efficient catalytic conversion of noxious components in the exhaust. To this end, it is known in the art to include an adsorbent material, which may be a zeolite, as part of a catalytic treatment system in order to adsorb gaseous pollutants, usually hydrocarbons, and retain them during the initial cold-start period. As the exhaust gas temperature increases, the adsorbed hydrocarbons are driven from the adsorbent and subjected to catalytic treatment at the higher temperature. In this regard, US 5,125,231 discloses the use of platinum group metal-doped zeolites as low temperature hydrocarbon adsorbents as well as oxidation catalysts.

As discussed hereinabove, oxidation catalysts comprising a platinum group metal (PGM) dispersed on a refractory metal oxide support are known for use in treating exhaust gas emissions from diesel engines. Platinum (Pt) remains the most effective platinum group metal for oxidizing CO and HC in a DOC, after high temperature aging under lean conditions and in the presence of fuel sulfur. Nevertheless, one of the major advantages of using palladium (Pd) based catalysts is the lower cost of Pd compared to Pt. However, Pd based DOCs typically show higher light-off temperatures for oxidation of CO and HC, especially when used with HC storage materials, potentially causing a delay in HC and or CO light-off. Pd containing DOCs may poison the activity of Pt to convert paraffins and/or oxidize NO and may also make the catalyst more susceptible to sulfur poisoning. These characteristics have typically prevented the use of Pd as an oxidation catalyst in lean burn operations especially for light duty diesel applications where engine temperatures remain below 250 °C for most driving conditions. As emissions regulations become more stringent, there is a continuing goal to develop diesel oxidation catalyst (DOC) systems that provide improved performance, for example, light-off performance.

WO2010/133309 discloses Pd enriched diesel oxidation catalysts and their application as catalysts for the oxidation of CO and HC emissions from a compression ignition/diesel engine.

WO2010/083313 discloses a diesel oxidation catalyst comprising at least two, specifically three distinct layers, at least one of which contains an oxygen storage compound (OSC) that is present in a layer separate from the majority of the platinum group metal (PGM) components, such as palladium and platinum.

US 2008/045405 discloses a diesel oxidation catalyst for the treatment of exhaust gas emissions, such as the oxidation of unburned hydrocarbons and carbon monoxide, and the reduction of nitrogen oxides. More particularly, US 2008/045405 is directed to a washcoat composition comprising two distinct washcoat layers containing two distinctly different weight ratios of Pt:Pd.

However, these prior art DOCs still show unsatisfactory breakthrough of HC and CO. Further, hydrocarbon storage capacity of these prior art DOCs is enhanced at the expense of the catalytic activity of the catalyst.

Consequently, the present invention is directed to a diesel oxidation catalyst with a layered structure in order to maximize the hydrocarbon storage capacity without sacrificing the catalytic activity of the catalyst. Additionally, it was an object of the present invention to provide a DOC which continually supports the oxidation and abatement of CO and unburned HC and thus allows for a minimum breakthrough of HC and CO. Finally, it was an object of the present invention to provide a DOC which, due to the rarity and consequently costs of precious metal components usually used for the preparation of DOCs, contains a reduced amount of platinum in the catalyst composition allowing for reduced costs for the DOC without reducing the catalytic efficiency. There is also a goal to utilize other components of DOCs, for example the zeolites, ceria, and palladium, as efficiently as possible.

### Summary

Provided is a layered diesel oxidation catalyst (DOC) comprising:
a) a carrier substrate;
b) a diesel oxidation catalytic material comprising
   b1) a first layer located on the carrier substrate, the first layer comprising palladium impregnated on a support material comprising ceria in an amount of at least 65 weight-% based on the total weight of the support material, and optionally comprising platinum;
   b2) a second layer located on the first layer, the second layer comprising palladium and platinum each impregnated on a support material comprising a metal oxide; wherein the platinum to palladium weight ratio of the second layer is in the range of from 10:1 to 1.5:1;
   wherein the platinum to palladium weight ratio of the first layer is lower than the platinum to palladium weight ratio of the second layer.

Further provided is a process for the preparation of such layered diesel oxidation catalyst comprising the steps of
(i) providing a carrier substrate;
(ii) optionally applying an undercoat layer on the carrier substrate;
(iii) applying a first layer on the carrier substrate or the undercoat layer, the first layer comprising palladium impregnated on a support material comprising ceria in an amount of at least 65 weight-% based on the total weight of the support material, and optionally comprising platinum;
(iv) applying a second layer on the first layer, the second layer comprising palladium and platinum each impregnated on a support material comprising a metal oxide,
   wherein the platinum to palladium weight ratio of the first layer is lower than the platinum to palladium weight ratio of the second layer;
(v) optionally applying a third layer on the second layer, the third layer comprising palladium impregnated on a support material comprising ceria in an amount of at least 45 weight-% based on the total
   weight of the support material, and optionally comprising platinum;
   wherein the platinum to palladium weight ratio of the third layer is lower than the platinum to palladium weight ratio of the second layer.

Yet further provided is a system for treating a gaseous exhaust stream of a diesel engine, the system comprising:
an exhaust conduit in fluid communication with the diesel engine via an exhaust manifold,
the layered diesel oxidation catalyst as defined above, wherein the carrier substrate is a wall-flow substrate or a flow through substrate, and
one or more of the following in fluid communication with the layered diesel oxidation catalyst composite: a catalyzed soot filter (CSF), a selective catalytic reduction (SCR) article, a NOx storage and reduction (NSR) catalytic article.

Still further provided is a method of treating a diesel exhaust stream, the method comprising contacting the exhaust stream with the layered diesel oxidation catalyst as defined above.

### Brief Description of the Drawings

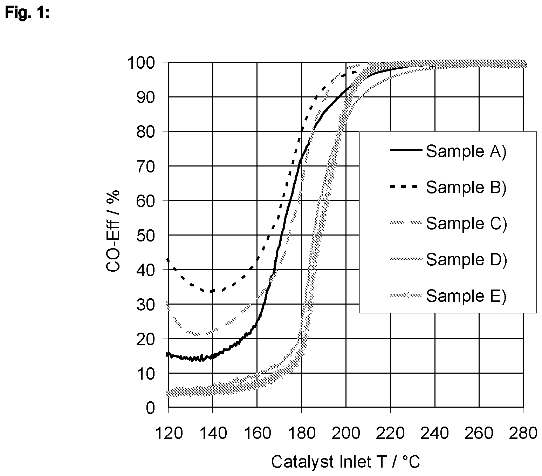

Figure 1 shows CO light-off curves obtained from the treatment of diesel exhaust using the DOCs according to Samples A), B), C), D) and E). The x-axis of the diagram denoted "Catalyst Inlet T / °C" shows the respective catalyst inlet temperature in °C and ranges from 120 °C to 280 °C, whereas the y-axis denoted "CO-Eff / %" shows the corresponding efficacy of CO oxidation to CO2 in % and ranges from 0 % to 100 %. The values for reference Sample A) are displayed in a solid line with bullets, the values for Sample B) not according to the invention are displayed in a dotted line, the values for Sample C) not according to the invention are displayed in a dashed line, the values for Sample D) not according to the invention are displayed in a solid line, and the values for Sample E) not according to the invention are displayed in a solid line with crosses.

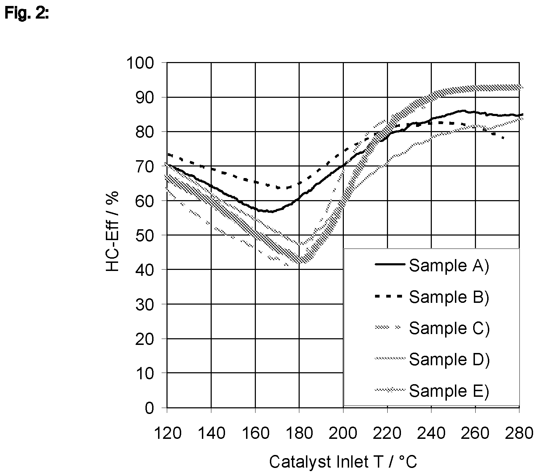

Figure 2 shows HC light-off curves obtained from the treatment of diesel exhaust using the DOCs according to Samples A), B), C), D) and E). The x-axis of the diagram denoted "Catalyst Inlet T / °C" shows the respective catalyst inlet temperature in °C and ranges from 120 °C to 280 °C, whereas the y-axis denoted "HC-Eff / %" shows the corresponding efficacy of HC oxidation to CO2 in % and ranges from 0 % to 100 %. The values for reference Sample A) are displayed in a solid line with bullets, the values for Sample B) not according to the invention are displayed in a dotted line, the values for Sample C) not according to the invention are displayed in a dashed line, the values for Sample D) not according to the invention are displayed in a solid line, and the values for Sample E) not according to the invention are displayed in a solid line with crosses.

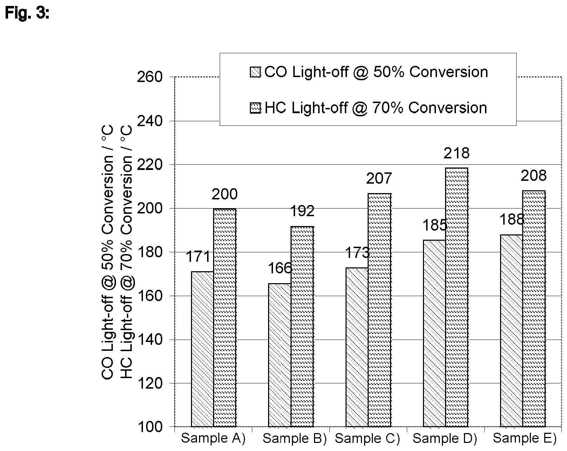

Figure 3 shows HC and CO light-off temperatures at 50 % conversion (CO) and 70 % conversion (HC) obtained from the treatment of diesel exhaust using the DOCs according to Samples A), B), C), D) and E). The x-axis of the diagram shows the respective Samples A) to E), whereas the y-axis denoted "CO Light-off @ 50 % Conversion / °C" and " HC Light-off @ 70 % Conversion / °C" shows the corresponding temperatures at which 50 % of CO are oxidized to CO2 and at which 70 % of HC are oxidized to CO2 , respectively, and ranges from 100 °C to 260 °C. The values for CO conversion are displayed as checkered bars, and the values for HC conversion are displayed as dashed bars.

### Detailed Description

The present invention relates to a layered diesel oxidation catalyst (DOC) comprising:
a) a carrier substrate;
b) a diesel oxidation catalytic material comprising
   b1) a first layer located on the carrier substrate, the first layer comprising palladium impregnated on a support material comprising ceria in an amount of at least 65 weight-% based on the total weight of the support material, and optionally comprising platinum;
   b2) a second layer located on the first layer, the second layer comprising palladium and platinum each impregnated on a support material comprising a metal oxide; wherein the platinum to palladium weight ratio of the second layer is in the range of from 10:1 to 1.5:1;
   wherein the platinum to palladium weight ratio of the first layer is lower than the platinum to palladium weight ratio of the second layer.

Generally, there are no specific restrictions as far as the platinum to palladium weight ratio of the first layer is concerned provided that the platinum to palladium weight ratio of the first layer is lower than the platinum to palladium weight ratio of the second layer. Preferably, the platinum to palladium weight ratio of the first layer is in the range of from 0:1 to 1.1:1.

Therefore, the present invention also relates to the diesel oxidation catalyst as defined above, wherein the platinum to palladium weight ratio of the first layer is in the range of from 0:1 to 1.1:1.

Preferably, the platinum to palladium weight ratio of the second layer is in the range of from 5:1 to 2:1, most preferably in a ratio of 2:1, provided that the platinum to palladium weight ratio of the first layer is lower than the platinum to palladium weight ratio of the second layer.

Therefore, the present invention also relates to the diesel oxidation catalyst as defined above, wherein the platinum to palladium weight ratio of the second layer is in the range of from 5:1 to 2:1, most preferably in a ratio of 2:1.

According to the present invention, the platinum to palladium weight ratio of the first layer is lower than the platinum to palladium weight ratio of the second layer. Preferably, the ratio of the platinum to palladium weight ratio of the first layer to the platinum to palladium weight ratio of the second layer is lower than or equal to 0.9.

Therefore, the present invention also relates to the diesel oxidation catalyst as defined above, wherein the ratio of the platinum to palladium weight ratio of the first layer to the platinum to palladium weight ratio of the second layer is lower than or equal to 0.9.

According to the present invention, the first layer comprises palladium impregnated on a support material comprising ceria in an amount of at least 65 weight-% based on the total weight of the support material. Preferably, the support material of the first layer comprises ceria in an amount of at least 85 weight-%, even more preferably at least 95 weight-%, most preferably 100 weight-% based on the total weight of the support material.

Therefore, the present invention relates to the diesel oxidation catalyst as defined above, wherein the support material of the first layer comprises ceria in an amount of at least 65 weight-%, preferably at least 85 weight-%, more preferably at least 95 weight-%, most preferably 100 weight-% based on the total weight of the support material.

Preferably, the support material of the first layer further comprises zirconia and/or alumina.

Therefore, the present invention relates to the diesel oxidation catalyst as defined above, wherein the support material of the first layer further comprises zirconia and/or alumina.

Preferably, the support material of the first layer further comprises a modifier selected from the group consisting of La₂O₃, Pr₆O₁₁, HfO₂, Y₂O₃, Yb₂O₃, YbO, Nd₂O₃, NdO, WO₃, SiO₂, TiO₂ and combinations of two or more thereof.

Therefore, the present invention relates to the diesel oxidation catalyst as defined above, wherein the support material of the first layer further comprises a modifier selected from the group consisting of La₂O₃, Pr₆O₁₁, HfO₂, Y₂O₃, Yb₂O₃, YbO, Nd₂O₃, NdO, WO₃, SiO₂, TiO₂ and combinations of two or more thereof.

It is disclosed that the support material of the first layer comprises a ceria-zirconia material consisting of CeO₂: 45 wt%, ZrO₂: 43.5 wt%, La₂O₃: 8 wt%, Pr₆O₁₁: 2 wt%, and HfO₂: 1.5 wt%.

According to the present invention, the support material of the second layer may comprise a metal oxide. Preferably, the support material of the second layer comprises a metal oxide selected from the group consisting of alumina, zirconia, silica, titania, silica-alumina, alumina-zirconia, titania-silica, titania-zirconia, titania-alumina, and combinations of two or more thereof.

Therefore, the present invention relates to the diesel oxidation catalyst as defined above, wherein the support material of the second layer comprises a metal oxide selected from the group consisting of alumina, zirconia, silica, titania, silica-alumina, alumina-zirconia, titania-silica, titania-zirconia, titania-alumina, and combinations of two or more thereof.

According to the present invention, it is further preferred that the metal oxide of the second layer comprises alumina, more preferably gamma alumina or activated alumina, such as gamma or eta alumina. Preferably, the activated alumina has a specific surface area, determined according to BET surface area measurements, of from 60 to 300 m²/g, preferably from 90 to 200 m²/g, mostly preferred from 100 to 180 m²/g.

It is further preferred that the second layer has a ceria content of not more than 5 weight-%, preferably not more than 1 weight-%, more preferably not more than 0.1 weight-%.

Therefore, the present invention relates to the diesel oxidation catalyst as defined above, wherein the second layer has a ceria content of not more than 5 weight-%, preferably not more than 1 weight-%, more preferably not more than 0.1 weight-%.

Generally, there are no specific restrictions as far as the palladium content of the first layer is concerned provided that the platinum to palladium weight ratio of the first layer is lower than the platinum to palladium weight ratio of the second layer. Preferably, the first layer comprises palladium in an amount of from 0.2 to 2.1 g/l (6 to 60 g/ft3).

Therefore, the present invention relates to the diesel oxidation catalyst as defined above, wherein the first layer comprises palladium in an amount of from 0.2 to 2.1 g/l (6 to 60 g/ft3).

Generally, there are no specific restrictions as far as the platinum content of the first layer is concerned provided that the platinum to palladium weight ratio of the first layer is lower than the platinum to palladium weight ratio of the second layer. Preferably, the first layer comprises platinum in an amount of from 0.5 to 1.4 g/l (15 to 40 g/ft3).

Therefore, the present invention relates to the diesel oxidation catalyst as defined above, wherein the first layer comprises platinum in an amount of from 0.5 to 1.4 g/l (15 to 40 g/ft3).

Generally, there are no specific restrictions as far as the total content of platinum and palladium of the second layer is concerned provided that the platinum to palladium weight ratio of the first layer is lower than the platinum to palladium weight ratio of the second layer. Preferably, the second layer comprises platinum and palladium in a total amount of from 1.06 to 6.36 g/l (30 to 180 g/ft3).

Therefore, the present invention relates to the diesel oxidation catalyst as defined above, wherein the second layer comprises platinum and palladium in a total amount of from 1.06 to 6.36 g/l (30 to 180 g/ft3).

While there are no specific restrictions as far as the total amount of platinum and palladium of the diesel oxidation catalytic material is concerned provided that the platinum to palladium weight ratio of the first layer is lower than the platinum to palladium weight ratio of the second layer, it is preferred that the diesel oxidation catalytic material comprises platinum and palladium in a total amount of from 1.06 to 8.48 g/l (30 to 240 g/ft3).

Therefore, the present invention relates to the diesel oxidation catalyst as defined above, wherein the diesel oxidation catalytic material comprises platinum and palladium in a total amount of from 1.06 to 8.48 g/l (30 to 240 g/ft3).

Preferably, the second layer further comprises a hydrocarbon storage compound, preferably a zeolite. If present, the second layer comprises the hydrocarbon storage compound in a total amount of from 0.003 to 0.035 g/l (0.1 to 1 g/ft³⁾, preferably of from 0.011 to 0.028 g/l (0.3 to 0.8 g/ft³), more preferably in an amount of 0.018 g/l (0.5 g/ft³).

Therefore, the present invention relates to the diesel oxidation catalyst as defined above, wherein the second layer further comprises a hydrocarbon storage compound, preferably a zeolite.

Typically, any structure types of zeolites/aluminosilicates can be used, such as structure types of ABW, ACO, AEI, AEL, AEN, AET, AFG, AFI, AFN, AFO, AFR, AFS, AFT, AFX, AFY, AHT, ANA, APC, APD, AST, ASV, ATN, ATO, ATS, ATT, ATV, AWO, AWW, BCT, BEA, BEC, BIK, BOG, BPH, BRE, CAN, CAS, SCO, CFI, SGF, CGS, CHA, CHI, CLO, CON, CZP, DAC, DDR, DFO, DFT, DOH, DON, EAB, EDI, EMT, EON, EPI, ERI, ESV, ETR, EUO, FAU, FER, FRA, GIS, GIU, GME, GON, GOO, HEU, IFR, IHW, ISV, ITE, ITH, ITW, IWR, IWW, JBW, KFI, LAU, LEV, LIO, LIT, LOS, LOV, LTA, LTL, LTN, MAR, MAZ, MEI, MEL, MEP, MER, MFI, MFS, MON, MOR, MOZ, MSO, MTF, MTN, MTT, MTW, MWW, NAB, NAT, NES, NON, NPO, NSI, OBW, OFF, OSI, OSO, OWE, PAR, PAU, PHI, PON, RHO, RON, RRO, RSN, RTE, RTH, RUT, RWR, RWY, SAO, SAS, SAT, SAV, SBE, SBS, SBT, SFE, SFF, SFG, SFH, SFN, SFO, SGT, SOD, SOS, SSY, STF, STI, STT, TER, THO, TON, TSC, UEI, UFI, UOZ, USI, UTL, VET, VFI, VNI, VSV, WIE, WEN, YUG, ZON or a mixture of one or more thereof.

The zeolite can be a natural or synthetic zeolite such as faujasite, chabazite, clinoptilolite, mordenite, silicalite, zeolite X, zeolite Y, ultrastable zeolite Y, ZSM-5 zeolite, ZSM-12 zeolite, SSZ-3 zeolite, SAPO 5 zeolite, offretite, or a beta zeolite. Preferred zeolite materials have a high silica to alumina ratio. The zeolites may have a silica:alumina molar ratio of from at least 25:1, preferably at least 50:1, with useful ranges of from 25:1 to 1000:1, 50:1 to 500:1 as well as 25:1 to 300:1, from 100:1 to 250:1, or alternatively from 35:1 to 180:1 is also exemplified. Preferred zeolites include ZSM, Y and beta zeolites. A particularly preferred beta zeolite is of the type disclosed in US 6,171,556. The zeolite can be present in its H-Form and/or its Na-Form. Further, the zeolite can be metal-doped.

It is further preferred that the diesel oxidation catalyst further comprises an undercoat layer located between the carrier substrate and the first layer, the undercoat layer preferably comprising alumina, more preferably gamma-alumina.

Therefore, the present invention relates to the diesel oxidation catalyst as defined above further comprising an undercoat layer located between the carrier substrate and the first layer, the undercoat layer preferably comprising alumina, more preferably gamma-alumina.

According to the present invention, the carrier substrate may be a flow-through substrate or a wall flow substrate.

Therefore, the present invention relates to the diesel oxidation catalyst as defined above, wherein the carrier substrate is a flow-through substrate or a wall flow substrate.

Wall flow substrates useful for the diesel oxidation catalysts of the present invention have a plurality of fine, substantially parallel flow passages extending along the longitudinal axis of the substrate. Each passage is blocked at one end of the substrate body, with alternate passages blocked at opposite end-faces. Such monolithic carriers may contain up to about 400 flow passages (or "cells") per square inch ((2.54 cm)²) of cross section, although far fewer may be used. For example, the carrier may have from 7 to 400, preferably from 100 to 400, cells per square inch ("cpsi"). The cells can have cross sections that are rectangular, square, circular, oval, triangular, hexagonal, or are of other polygonal shapes.

Preferred wall flow substrates are composed of ceramic-like materials such as cordierite, alpha-alumina, silicon carbide, silicon nitride, zirconia, mullite, spodumene, alumina-silica-magnesia or zirconium silicate, or of refractory metals such as stainless steel. Preferred wall flow substrates are formed from cordierite and silicon carbide. Such materials are able to withstand the environment, particularly high temperatures, encountered in treating the exhaust streams. Ceramic wall flow substrates are typically formed of a material having a porosity of about 40 to 70. The term "porosity" as used in this context is understood as being determined according to mercury porosity measurement according to DIN 66133. According to the present invention, wall flow substrates are preferred having a porosity in the range from 38 to 75.

It is further preferred that the carrier substrate comprises a material selected from the group consisting of cordierite, cordierite-alumina, silicon nitride, silicon carbide, zircon mullite, spodumene, alumina-silica magnesia, zircon silicate, sillimanite, magnesium silicate, zircon, petalite, alumina, alumosilicate and combinations of two or more thereof.

Therefore, the present invention relates to the diesel oxidation catalyst as defined above, wherein the carrier substrate comprises a material selected from the group consisting of cordierite, cordierite-alumina, silicon nitride, silicon carbide, zircon mullite, spodumene, alumina-silica magnesia, zircon silicate, sillimanite, magnesium silicate, zircon, petalite, alumina, alumosilicate and combinations of two or more thereof.

Generally, there are no specific restrictions as far as the number of layers of the layered diesel oxidation catalyst is concerned. With the proviso that the diesel oxidation catalytic material comprises at least
b1) a first layer located on the carrier substrate, the first layer comprising palladium impregnated on a support material comprising ceria in an amount of at least 65 weight-% based on the total weight of the support material, and optionally comprising platinum; and
b2) a second layer located on the first layer, the second layer comprising palladium and platinum each impregnated on a support material comprising a metal oxide;
   wherein the platinum to palladium weight ratio of the second layer is in the range of from 10:1 to 1.5:1;
   wherein the platinum to palladium weight ratio of the first layer is lower than the platinum to palladium weight ratio of the second layer, the number of layers of the layered diesel oxidation catalyst can be varied. Preferably, the layered diesel oxidation catalyst further comprises
b3) a third layer located on the second layer, the third layer comprising palladium impregnated on a support material comprising ceria in an amount of at least 45 weight-% based on the total weight of the support material, and optionally comprising platinum,
   wherein the platinum to palladium weight ratio of the third layer is lower than the platinum to palladium weight ratio of the second layer.

Therefore, the present invention relates to the diesel oxidation catalyst as defined above, further comprising
b3) a third layer located on the second layer, the third layer comprising palladium impregnated on a support material comprising ceria in an amount of at least 45 weight-% based on the total weight of the support material, and optionally comprising platinum, wherein the platinum to palladium weight ratio of the third layer is lower than the platinum to palladium weight ratio of the second layer.

According to the present invention, if a third layer is present, the platinum to palladium weight ratio of the third layer is lower than the platinum to palladium weight ratio of the second layer. Preferably, the ratio of the platinum to palladium weight ratio of the third layer to the platinum to palladium weight ratio of the second layer is lower than or equal to 0.9.

Therefore, the present invention also relates to the diesel oxidation catalyst as defined above, wherein the ratio of the platinum to palladium weight ratio of the third layer to the platinum to palladium weight ratio of the second layer is lower than or equal to 0.9.

According to the present invention, if a third layer is present, the third layer comprises palladium impregnated on a support material comprising ceria in an amount of at least 45 weight-% based on the total weight of the support material. Preferably, the support material of the third layer comprises ceria in an amount of at least 65 weight-%, more preferably at least 85 weight-%, most preferably at least 95 weight-% based on the total weight of the support material.

Therefore, the present invention relates to the diesel oxidation catalyst as defined above, wherein the support material of the third layer comprises ceria in an amount of at least 65 weight-%, preferably at least 85 weight-%, more preferably at least 95 weight-% based on the total weight of the support material.

Preferably, the support material of the third layer further comprises zirconia and/or alumina.

Therefore, the present invention relates to the diesel oxidation catalyst as defined above, wherein the support material of the third layer further comprises zirconia and/or alumina.

Preferably, the support material of the third layer further comprises a modifier selected from the group consisting of La₂O₃, Pr₆O₁₁, HfO₂, Y₂O₃, Yb₂O₃, YbO, Nd₂O₃, NdO, WO₃, SiO₂, TiO₂ and combinations of two or more thereof.

Therefore, the present invention relates to the diesel oxidation catalyst as defined above, wherein the support material of the third layer further comprises a modifier selected from the group consisting of La₂O₃, Pr₆O₁₁, HfO₂, Y₂O₃, Yb₂O₃, YbO, Nd₂O₃, NdO, WO₃, SiO₂, TiO₂ and combinations of two or more thereof.

Most preferably, the support material of the third layer comprises a ceria-zirconia material consisting of CeO₂: 45 wt%, ZrO₂: 43.5 wt%, La₂O₃: 8 wt%, Pr₆O₁₁: 2 wt%, and HfO₂: 1.5 wt%.

Generally, there are no specific restrictions as far as the palladium content of the third layer is concerned provided that the platinum to palladium weight ratio of the third layer is lower than the platinum to palladium weight ratio of the second layer. Preferably, the third layer comprises palladium in an amount of from 0.07 to 1.06 g/l (2 to 30 g/ft3).

Therefore, the present invention relates to the diesel oxidation catalyst as defined above, wherein the third layer comprises palladium in an amount of from 0.07 to 1.06 g/l (2 to 30 g/ft3).
Generally, there are no specific restrictions as far as the platinum content of the third layer is concerned provided that the platinum to palladium weight ratio of the third layer is lower than the platinum to palladium weight ratio of the second layer. Preferably, the third layer comprises platinum in an amount of from 0.14 to 0.56 g/l (4 to 16 g/ft3).

Therefore, the present invention relates to the diesel oxidation catalyst as defined above, wherein the third layer comprises platinum in an amount of from 0.14 to 0.56 g/l (4 to 16 g/ft3).
Preferably, the third layer further comprises a hydrocarbon storage compound, preferably a zeolite. If present, the third layer comprises the hydrocarbon storage compound in a total amount of from 0.003 to 0.035 g/l (0.1 to 1 g/ft³), preferably of from 0.011 to 0.028 g/l (0.3 to 0.8 g/ft³), more preferably in an amount of 0.018 g/l (0.5 g/ft³).

Therefore, the present invention relates to the diesel oxidation catalyst as defined above, wherein the third layer further comprises a hydrocarbon storage compound, preferably a zeolite.

Typically, any structure types of zeolites/aluminosilicates can be used. In this respect, reference is made to the structure types mentioned for the second layer.

The layered diesel oxidation catalyst of the present invention can be used in an integrated system for treating a gaseous exhaust stream of a diesel engine.

Therefore, the present invention also relates to the layered diesel oxidation catalyst as defined above comprised in a system for treating of a gaseous exhaust stream of a diesel engine, the system further comprising:
an exhaust conduit in fluid communication with the diesel engine via an exhaust manifold, and
one or more of the following in fluid communication with the layered diesel oxidation catalyst composite: a catalyzed soot filter (CSF), a selective catalytic reduction (SCR) article, a NOx storage and reduction (NSR) catalytic article.

Each of the layers of the diesel catalytic material according to the present invention is formed from a washcoat composition that contains the respective support material as described above. Other additives such as binders and stabilizers can also be included in the washcoat composition. As disclosed in United States Patent No. 4,727,052, porous support materials, such as activated alumina, can be thermally stabilized to retard undesirable alumina phase transformations from gamma to alpha at elevated temperatures. Stabilizers can be selected from at alkaline earth metal components selected from the group consisting of magnesium, barium, calcium and strontium, preferably strontium and barium. When present, stabilizer materials are added at from about 0.01 g/in³ (g/(2.54 cm)³) to 0.15 g/in³ (g/(2.54 cm)³) in the coating.

The first layer is disposed on the surface of the carrier substrate or the undercoat layer. The second layer is disposed on the first layer which had been applied onto the surface of carrier substrate or the undercoat layer. Further, it is conceivable that a third layer is disposed on the second layer. It is to be understood that a given layer may partially permeate the substrate or the layer onto which it is applied.

For the preparation of the washcoat compositions mentioned above, it is preferred to disperse a suitable Pt and/or Pd component precursor on a suitable support material as described hereinabove. More preferably, a water-soluble or water-dispersible Pt and/or Pd component precursor is/are impregnated on a suitable support material, followed by drying and fixing steps. Suitable Pt and/or Pd component precursors include, for example, potassium platinum chloride, ammonium platinum thiocyanate, amine-solubilized platinum hydroxide, chloroplatinic acid, palladium nitrate, and the like. Other suitable precursors will be apparent to those of skill in the art. The impregnated support material is preferably dried with the Pt and/or Pd component fixed thereon. Generally, drying temperatures are in the range from 60 to 250 °C, preferably from 90 to 210 °C, more preferably from 100 to 150°C. Drying can be carried out in any suitable atmosphere, with N₂ or air being preferred. After drying, it is preferred to finally fix the Pt and/or Pd component on the support material by suitable calcination and/or other suitable methods such as treatment with acetic acid. In general, any method resulting in the Pt and/or Pd component being in water-insoluble form is suitable. Generally, calcination temperatures are in the range from 250 to 800 °C, preferably from 350 to 700 °C, more preferably from 400 to 600 °C. Calcination can be carried out in any suitable atmosphere, with N₂ or air being preferred. By, for example, calcination, the catalytically active elemental Pt and/or Pd or the respective oxide is obtained. It is to be understood that the term "platinum" or "palladium" present in the finally obtained layered diesel oxidation catalyst as used in the context of the present invention relates to the Pt and/or Pd component in the form of the catalytically active elemental Pt and/or Pd, or the oxide thereof, or the mixture of elemental Pt and/or Pd and the oxide thereof.

Therefore, the present invention also relates to a process for the preparation of the layered diesel oxidation catalyst as defined above, comprising the steps of
(i) providing a carrier substrate;
(ii) optionally applying an undercoat layer on the carrier substrate;
(iii) applying a first layer on the carrier substrate or the undercoat layer, the first layer comprising palladium impregnated on a support material comprising ceria in an amount of at least 65 weight-% based on the total weight of the support material, and optionally comprising platinum;
(iv) applying a second layer on the first layer, the second layer comprising palladium and platinum each impregnated on a support material comprising a metal oxide,
   wherein the platinum to palladium weight ratio of the first layer is lower than the platinum to palladium weight ratio of the second layer;
(v) optionally applying a third layer on the second layer, the third layer comprising palladium impregnated on a support material comprising ceria in an amount of at least 45 weight-% based on the total weight of the support material, and optionally comprising platinum,
   wherein the platinum to palladium weight ratio of the third layer is lower than the platinum to palladium weight ratio of the second layer.

Further, the present invention relates to a system for treating of a gaseous exhaust stream of a diesel engine, the system comprising:
an exhaust conduit in fluid communication with the diesel engine via an exhaust manifold,
the layered diesel oxidation catalyst as described above, wherein the carrier substrate is a wall-flow substrate or a flow through substrate, and
one or more of the following in fluid communication with the layered diesel oxidation catalyst composite: a catalyzed soot filter (CSF), a selective catalytic reduction (SCR) article, a NOx storage and reduction (NSR) catalytic article.

Preferably, in this system, if present, the layered diesel oxidation catalyst is located upstream of the catalyzed soot filter.

Therefore, the present invention relates to a system for treating a gaseous exhaust stream of a diesel engine as defined above comprising a catalyzed soot filter, wherein the layered diesel oxidation catalyst is located upstream of the catalyzed soot filter.

A suitable SCR article for use in the exhaust conduit is typically able to catalyze the reaction of O₂ with any excess NH₃ to N₂ and H₂O, so that NH₃ is not emitted to the atmosphere. Suitable SCR articles are described, for instance, in US 4,961,917 and US 5,516,497. Suitable SCR articles include one or both of an iron and a copper promoter typically present in a zeolite in an amount of from about 0.1 to 30 percent by weight, preferably from about 1 to 5 percent by weight, of the total weight of promoter plus zeolite. Typical zeolites may exhibit a CHA framework structure.

Finally, the present invention relates to a method of treating a gaseous exhaust stream of a diesel engine, said method comprising contacting the exhaust stream with the layered diesel oxidation catalyst as defined above.

In the following, the present invention is further illustrated by the following examples.

### Examples

### 1. Catalyst preparation

### Reference Sample A)

For the 1^{st} (bottom) layer a Palladium nitrate solution was added to 45.77 g/l (0.75 g/in³)high porous gamma-alumina resulting in 0.78 g/l (22 g/ft³)Pd. The resulting frit was dispersed in water and acetic acid and milled to a particle size d₉₀ of 25 micrometer. Into this slurry 45.77 g/l (0.75 g/in³)of a material consisting of ZrO₂: 43.5 wt%, CeO₂: 45 wt%, La₂O₃: 8 wt%, Pr₆O₁₁: 2 wt%, and HfO₂: 1.5% was dispersed and milled to a particle size d₉₀ of 7 micrometer. The final slurry was coated onto a monolith, dried at 110°C in air and calcined at 450°C in air.

For the 2^{nd} (middle) layer 91.54 g/l (1.5 g/in³) of high porous gamma-alumina was impregnated with an aqueous solution of Palladium nitrate giving a final dry Pd content of 1.06 g/l (30g/ft³). The resulting powder was dispersed in water. Platinum solution with Platinum as an ammine stabilized hydroxo Pt IV complex was added to give a dry Pt content of 2.12 g/l (60 g/ft³). After adjusting the pH of the slurry to 4.5 the slurry was milled to a particle size d₉₀ of 16µm. The slurry was subsequently coated onto the 1^{st} layer, dried at 110°C in air and calcined at 450°C in air.

For the 3rd (top) layer 15.26 g/l (0.25g/in3 ) of high porous gamma-alumina and (0.5 g/in3) of a material consisting of ZrO2 : 43.5 wt%, CeO2 : 45 wt%, La2 O3 : 8 wt%, Pr6 O11 : 2 wt%, and HfO2 : 1.5% were mixed and impregnated with an aqueous solution of Palladium nitrate giving a final dry Pd content of 0.28 g/l (8 g/ft3). Subsequently the impregnated material was dispersed in water and acetic acid and milled to a particle size d90 of 20 micrometer. 30.52 g/l (0.5g/in3) H-beta zeolite was immersed in water to a solid content of 45%. The precious metal containing slurry was mixed with the H-beta zeolite containing slurry, milled to a particle size d90 of 15µm and subsequently coated onto the 2nd layer, dried at 110°C in air and calcined at 450°C in air.

### Sample B) not according to the invention

For the 1^{st} (bottom) layer a Palladium nitrate solution was added to a mixture of high porous gamma-alumina 45.77 g/l (0.75 g/in³) and 100% Ceria material 45.77 g/l (0.75 g/in³) resulting in 1.27 g/l (36 g/ft³) Pd. The resulting frit was dispersed in water and acetic acid and milled to a particle size d₉₀ of 7 micrometer. The final slurry was coated onto a monolith, dried at 110°C in air and calcined at 450°C in air.

For the 2^{nd} (middle) layer 91.54 g/l (1.5 g/in³)of high porous gamma-alumina was impregnated with an aqueous solution of Palladium nitrate giving a final dry Pd content of 0.92 g/l (26 g/ft³). The resulting powder was dispersed in water. Platinum solution with Platinum as an ammine stabilized hydroxo Pt IV complex was added to give a dry Pt content of 1.84 g/l (52 g/ft³). After adjusting the pH of the slurry to 4.5 the slurry was milled to a particle size d₉₀ of 16µm. The slurry was subsequently coated onto the 1^{st} layer, dried at 110°C in air and calcined at 450°C in air.

For the 3rd (top) layer high porous gamma-alumina 15.26 g/l (0.25g/in3) and 100% Ceria material (0.5 g/in3) were mixed and impregnated with an aqueous solution of Palladium nitrate giving a final dry Pd content of 0.28 g/l (8 g/ft3). Subsequently the impregnated material was dispersed in water and acetic acid and milled to a particle size d90 of 20 micrometer. 30.52 g/l (0.5g/in3) H-beta zeolite was immersed in water to a solid content of 45%. The precious metal containing slurry was mixed with the H-beta zeolite containing slurry, milled to a particle size d90 of 15µm and subsequently coated onto the 2nd layer, dried at 110°C in air and calcined at 450°C in air.

For the 1^{st} (bottom) layer a Palladium nitrate solution was added to a mixture of high porous gamma-alumina 45.77 g/l (0.75 g/in³) and 100% Ceria material 45.77 g/l (0.75 g/in³) resulting in 1.06 g/l (30 g/ft³) Pd. The resulting frit was dispersed in water and acetic acid and milled to a particle size d₉₀ of 7 micrometer. The final slurry was coated onto a monolith, dried at 110°C in air and calcined at 450°C in air.

For the 2^{nd} (top) layer 61.02 g/l (1 g/in³) of high porous gamma-alumina was impregnated with an aqueous solution of Palladium nitrate giving a final dry Pd content of 1.06 g/l (30 g/ft³). The resulting powder was dispersed in water. Platinum solution with Platinum as an ammine stabilized hydroxo Pt IV complex was added to give a dry Pt content of 2.12 g/l (60 g/ft³). After adjusting the pH of the slurry to 4.5 the slurry was milled to a particle size d₉₀ of 16µm. H-beta zeolite was immersed in water to a solid content of 45%. The precious metal containing slurry was then mixed with the H-beta zeolite containing slurry, milled to a particle size d₉₀ of 15µm and subsequently coated onto the 1^{st} layer, dried at 110°C in air and calcined at 450°C in air.

### Sample D) not according to the invention

For the 1^{st} (bottom) layer a Palladium nitrate solution was added to 45.77 g/l (0.75 g/in³) high porous gamma-alumina resulting in 0.78 g/l (22 g/ft³) Pd. The resulting frit was dispersed in water and acetic acid and milled to a particle size d₉₀ of 25 micrometer. Into this slurry 45.77 g/l (0.75 g/in³) high porous gamma-alumina was dispersed and milled to a particle size d₉₀ of 7 micrometer. The final slurry was coated onto a monolith, dried at 110°C in air and calcined at 450°C in air.

For the 2^{nd} (middle) layer 91.54 g/l (1.5 g/in³)of high porous gamma-alumina was impregnated with an aqueous solution of Palladium nitrate giving a final dry Pd content of 1.06 g/l (30 g/ft³.) The resulting powder was dispersed in water. Platinum solution with Platinum as an ammine stabilized hydroxo Pt IV complex was added to give a dry Pt content of 2.12 g/l (60 g/ft³). After adjusting the pH of the slurry to 4.5 the slurry was milled to a particle size d₉₀ of 16µm. The slurry was subsequently coated onto the 1^{st} layer, dried at 110°C in air and calcined at 450°C in air.

For the 3^{rd} (top) layer 45.77 g/l (0.75 g/in³) high porous gamma-alumina was impregnated with an aqueous solution of Palladium nitrate giving a final dry Pd content of 0.28 g/l (8 g/ft³) Subsequently the impregnated material was dispersed in water and acetic acid and milled to a particle size d₉₀ of 20 micrometer. 30.52 g/l (0.5g/in³)H-beta zeolite was immersed in water to a solid content of 45%. The precious metal containing slurry was mixed with the H-beta zeolite containing slurry, milled to a particle size d₉₀ of 15µm and subsequently coated onto the 2^{nd} layer, dried at 110°C in air and calcined at 450°C in air.

### Sample E) not according to the invention

For the 1^{st} (bottom) layer 61.02 g/l (1g/in³) high porous gamma-alumina was dispersed in water and acetic acid and milled to a particle size d₉₀ of 15 micrometer. The final slurry was coated onto a monolith, dried at 110°C in air and calcined at 450°C in air.

For the 2^{nd} (middle) layer 91.54 g/l (1.5 g/in³) high porous gamma-alumina was impregnated with an aqueous solution of Palladium nitrate giving a final dry Pd content of 0.99 g/l (28g/ft³). The resulting powder was dispersed in water. Platinum solution with Platinum as an ammine stabilized hydroxo Pt IV complex was added to give a dry Pt content of 1.84 g/l (52 g/ft³). After adjusting the pH of the slurry to 4.5 the slurry was milled to a particle size d₉₀ of 16µm. The slurry was subsequently coated onto the 1^{st} layer, dried at 110°C in air and calcined at 450°C in air.

For the 3^{rd} (top) layer 15.26 g/l (0.25g/in³)high porous gamma-alumina was dispersed in water and acetic acid and milled to a particle size d₉₀ of 20 micrometer. 30.52 g/l (0.5g/in³) H-beta zeolite was immersed in water to a solid content of 45%. To this slurry a platinum precursor solution with platinum as an ammine stabilized hydroxo Pt IV complex was added to give a Pt content of 0.28 g/l (8g/ft³). The precious metal containing slurry was mixed with the alumina containing slurry, milled to a particle size d₉₀ of 15µm and subsequently coated onto the 2^{nd} layer, dried at 110°C in air and calcined at 450°C in air.

### 2. Testing of HC/CO Gas Activity Performance

### Reference Sample A)

### Sample C) not according to the invention

1st Layer: 0.78 g/l (22 g/ft3) Pd, 45.77 g/l (0.75 g/in3) (ZrO2 : 43.5 wt%, CeO2 : 45 wt%, La2 O3 : 8 wt%, Pr6 O11 : 2 wt%, and HfO2 : 1.5%), 45.77 g/l (0.75 g/in3) high porous gamma-alumina
2nd Layer: 2.12 g/l (60 g/ft3)Pt, 1.06 g/l (30 g/ft3)Pd, 91.54 g/l (1.5 g/in3) high porous gamma-alumina
3rd Layer: 0.28 g/l (8 g/ft3) Pd, 15.26 g/l (0.25 g/in3) high porous gamma-alumina, 30.52 g/l (0.5 g/in3 )H-Beta zeolite, 30.52 g/l (0.5 g/in3) (ZrO2 : 43.5 wt%, CeO2 : 45 wt%, La2 O3 : 8 wt%, Pr6 O11 : 2 wt%, and HfO2 : 1.5%)

### Sample B) not according to the invention

1^{st} Layer: 1.27 g/l (36 g/ft3) Pd, 45.77 g/l (0.75 g/in3) Ceria, 45.77 g/l (0.75 g/in3) high porous gamma-alumina
2nd Layer: 1.84 g/l (52 g/ft3) Pt, 0.92 g/l (26 g/ft3) Pd, 91.54 g/l (1.5 g/in3) high porous gamma-alumina
3rd Layer: 0.56 g/l (16/ft3)Pd, 15.26 g/l (0.25 g/in3) high porous gamma-alumina, (0.5 g/in3) H-Beta zeolite,(0.5 g/in3) 100% Ceria

### Sample C) not according to the invention

1^{st} Layer: 1.27 g/l (36 g/ft³)Pd, 45.77 g/l (0.75 g/in³) Ceria, 45.77 g/l (0.75 g/in³)high porous gamma-alumina
2^{nd} Layer: 2.12 g/l (60 g/ft³)Pt, 1.06 g/l (30 g/ft³)Pd, 61.02 g/l (1 g/in³) high porous gamma-alumina 30.52 g/l (0.5 g/in³)H-Beta zeolite

### Sample D) not according to the invention

1^{st} Layer: 0.78 g/l (22 g/ft³) Pd, 91.54 g/l (1.5 g/in³)high porous gamma-alumina
2^{nd} Layer: 2.12 g/l (60 g/ft³)Pt, 1.06 g/l (30 g/ft³)Pd, 91.54 g/l (1.5 g/in³)high porous gamma-alumina
3^{rd} Layer: 0.28 g/l (8 g/ft³)Pd, 45.77 g/l (0.75 g/in³)high porous gamma-alumina, 30.52 g/l (0.5 g/in³)H-Beta zeolite

### Sample E) not according to the invention

1^{st} Layer: 61.02 g/l (1 g/in³)high porous gamma-alumina
2^{nd} Layer: 2.54 g/l (72 Pt, 1.41 g/l (40 g/ft³)Pd, 91.54 g/l (1.5 g/in³) high porous gamma-alumina
3^{rd} Layer: 0.28 g/l (8 g/ft³)Pt, 15.26 g/l (0.25 g/in³)high porous gamma-alumina, 30.52 g/l (0.5 g/in³)H-Beta zeolite

### 3. Light-Off Performance Testing

Samples A), B), C), D) and E) were tested for CO and HC light-off performance. Prior to testing the samples were aged in the exhaust stream of a 4 cylinder light duty diesel engine with 2.7L engine displacement for 25h. The temperature of the exhaust stream was raised by an upstream burner DOC to 750°C steady state.

For light-off testing each sample was placed downstream in the exhaust line of a 6 cylinder light duty diesel engine with a 3 L engine displacement. The CO and HC concentration in the exhaust stream was constant at 1500 ppm and 300 ppm (C₃ basis), respectively. The gas flow under standard conditions was around 60 m³/h. The temperature ramp was 40°C/min.

A lower light-off temperature characterizes a better gas activity.

### Sample C) not according to the invention

As can be taken from Figure 1 showing the CO light-off curves for Samples A), B), C), D) and E), reference Sample A), and samples B) and C) not according to the invention show higher CO conversion at lower temperatures compared to Samples D) and E) not according to the invention.

As can be taken from Figure 2 showing the HC light-off curves for Samples A), B), C), D) and E), reference Sample A) and sample B) not according to the invention show higher HC conversion at lower temperatures compared to Samples D) and E) not according to the invention. Sample C) not according to the invention shows a lower light-off temperature at around 70% HC conversion compared to Samples D) and E) not according to the invention.

As can be taken from Figure 3 showing the HC and CO light-off temperatures for Samples A), B), C), D) and E), precious metal cost reduced reference Sample A), samples B), and C) not according to the invention show lower light-off temperatures at 50 % CO conversion and 70% HC conversion compared to Samples D) and E) not according to the invention.

## Claims

1. A layered diesel oxidation catalyst (DOC) comprising:
a) a carrier substrate;
b) a diesel oxidation catalytic material comprising
b1 ) a first layer located on the carrier substrate, the first layer comprising
palladium impregnated on a support material comprising ceria in an amount of at least 65 weight-% based on the total weight of the support material, and optionally comprising platinum;
b2) a second layer located on the first layer, the second layer comprising
palladium and platinum each impregnated on a support material comprising a metal oxide;
wherein the platinum to palladium weight ratio of the second layer is in the range of from 10:1 to 1.5:1;
wherein the platinum to palladium weight ratio of the first layer is lower than the platinum to palladium weight ratio of the second layer.

2. The layered diesel oxidation catalyst according to claim 1, wherein the platinum to palladium weight ratio of the first layer is in the range of from 0:1 to 1.1:1 .

3. The layered diesel oxidation catalyst according to claim 1 or 2, wherein the platinum to palladium weight ratio of the second layer is in the range of from 5:1 to 2:1, preferably in a ratio of 2:1.

4. The layered diesel oxidation catalyst according to any of claims 1 to 3, wherein the ratio of the platinum to palladium weight ratio of the first layer to the platinum to palladium weight ratio of the second layer is lower than or equal to 0.9.

5. The layered diesel oxidation catalyst according to any of claims 1 to 4, wherein the support material of the first layer comprises ceria in an amount of at least 85 weight-%, more preferably at least 95 weight-% based on the total weight of the support material.

6. The layered diesel oxidation catalyst according to any of claims 1 to 5, wherein the support material of the first layer further comprises zirconia and/or alumina.

7. The layered diesel oxidation catalyst according to any of claims 1 to 6, wherein the support material of the first layer further comprises a modifier selected from the group consisting of La₂O₃, Pr₆On, HfO₂, Y₂O₃, Yb₂O₃, YbO, Nd₂O₃, NdO, WO₃, SiO₂, TiO₂ and combinations of two or more thereof.

8. The layered diesel oxidation catalyst according to any of claims 1 to 7, wherein the support material of the second layer comprises a metal oxide selected from the group consisting of alumina, zirconia, silica, titania, silica-alumina, alumina-zirconia, titania-silica, titania-zirconia, titania-alumina, and combinations of two or more thereof.

9. The layered diesel oxidation catalyst according to any of claims 1 to 8, wherein the second layer has a ceria content of not more than 5 weight-%, preferably not more than 1 weight-%, more preferably not more than 0.1 weight-%.

10. The layered diesel oxidation catalyst according to any of claims 1 to 9, wherein the first layer comprises palladium in an amount of from 0.2 to 2.1 g/L (6 to 60 g/ft³).

11. The layered diesel oxidation catalyst according to any of claims 1 to 10, wherein the first layer comprises platinum in an amount of from 0.5 to 1.4 g/L (15 to 40 g/ ft³).

12. The layered diesel oxidation catalyst according to any of claims 1 to 11, wherein the second layer comprises platinum and palladium in a total amount of from 1.06 to 6.36 g/L (30 to 180 g/ ft³).

13. The layered diesel oxidation catalyst according to any of claims 1 to 12, wherein the diesel oxidation catalytic material comprises platinum and palladium in a total amount of from 1.06 to 8.48 g/L (30 to 240 g/ ft³).

14. The layered diesel oxidation catalyst according to any of claims 1 to 13, wherein the second layer further comprises a hydrocarbon storage compound, preferably a zeolite.

15. The layered diesel oxidation catalyst according to any of claims 1 to 14, further comprising an undercoat layer located between the carrier substrate and the first layer.

16. The layered diesel oxidation catalyst according to claim 15, wherein the undercoat layer comprises alumina.

17. The layered diesel oxidation catalyst according to any of claims 1 to 16, wherein the carrier substrate is a flow-through substrate or a wall flow substrate.

18. The layered diesel oxidation catalyst according to any of claims 1 to 17, wherein the carrier substrate comprises a material selected from the group consisting of cordierite, cordierite-alumina, silicon nitride, silicon carbide, zircon mullite, spodumene, alumina-silica magnesia, zircon silicate, sillimanite, magnesium silicate, zircon, petalite, alumina, alumosilicate and combinations of two or more thereof.

19. The layered diesel oxidation catalyst according to any of claims 1 to 18, further comprising b3) a third layer located on the second layer, the third layer comprising
palladium impregnated on a support material comprising ceria in an amount of at least 45 weight-% based on the total weight of the support material, and optionally comprising platinum,
wherein the platinum to palladium weight ratio of the third layer is lower than the platinum to palladium weight ratio of the second layer.

20. The layered diesel oxidation catalyst according to claim 19, wherein the ratio of the platinum to palladium weight ratio of the third layer to the platinum to palladium weight ratio of the second layer is lower than or equal to 0.9.

21. The layered diesel oxidation catalyst according to claim 19 or 20, wherein the support material of the third layer comprises ceria in an amount of at least 65 weight-%, preferably at least 85 weight-%, more preferably at least 95 weight-% based on the total weight of the support material.

22. The layered diesel oxidation catalyst according to any of claims 19 to 21, wherein the support material of the third layer further comprises zirconia and/or alumina.

23. The layered diesel oxidation catalyst according to any of claims 19 to 22, wherein the support material of the third layer further comprises a modifier selected from the group consisting of La₂O₃, Pr₆On, HfO₂, Y₂O₃, Yb₂O₃, YbO, Nd₂O₃, NdO, WO₃, SiO₂, TiO₂ and combinations of two or more thereof.

24. The layered diesel oxidation catalyst according to any of claims 19 to 23, wherein the third layer comprises palladium in an amount of from 0.07 to 1.06 g/L (2 to 30 g/ft³).

25. The layered diesel oxidation catalyst according to any of claims 19 to 24, wherein the third layer comprises platinum in an amount of from 0.14 to 0.56 g/L (4 to 16 g/ ft³).

26. The layered diesel oxidation catalyst according to any of claims 19 to 25, wherein the third layer further comprises a hydrocarbon storage compound, preferably a zeolite.

27. The layered diesel oxidation catalyst according to any of claims 1 to 26 comprised in a system for treating of a gaseous exhaust stream of a diesel engine, the system further comprising:
an exhaust conduit in fluid communication with the diesel engine via an exhaust manifold, and one or more of the following in fluid communication with the layered diesel oxidation catalyst composite: a catalyzed soot filter (CSF), a selective catalytic reduction (SCR) article, a NOx storage and reduction (NSR) catalytic article.

28. A process for the preparation of the layered diesel oxidation catalyst according to any of claims 1 to 26, comprising the steps of
(i) providing a carrier substrate;
(ii) optionally applying an undercoat layer on the carrier substrate;
(iii) applying a first layer on the carrier substrate or the undercoat layer, the
first layer comprising palladium impregnated on a support material
comprising ceria in an amount of at least 65 weight-% based on the total weight of the support material, and optionally comprising platinum;
(iv) applying a second layer on the first layer, the second layer comprising
palladium and platinum each impregnated on a support material
comprising a metal oxide,
wherein the platinum to palladium weight ratio of the first layer is lower than the platinum to palladium weight ratio of the second layer;
(v) optionally applying a third layer on the second layer, the third layer
comprising palladium impregnated on a support material comprising ceria in an amount of at least 45 weight-% based on the total weight of the support material, and optionally comprising platinum,
wherein the platinum to palladium weight ratio of the third layer is lower than the platinum to palladium weight ratio of the second layer.

29. A system for treating a gaseous exhaust stream of a diesel engine, the system comprising:
an exhaust conduit in fluid communication with the diesel engine via an exhaust manifold,
the layered diesel oxidation catalyst according to any of claims 1 to 26, wherein the carrier substrate is a wall-flow substrate or a flow through substrate, and
one or more of the following in fluid communication with the layered diesel oxidation catalyst composite: a catalyzed soot filter (CSF), a selective catalytic reduction (SCR) article, a NOx storage and reduction (NSR) catalytic article.

30. The system according to claim 29 comprising a catalyzed soot filter, wherein the layered diesel oxidation catalyst is located upstream of the catalyzed soot filter.

31. Use of the layered diesel oxidation catalyst according to any of claims 1 to 26 for treating a gaseous exhaust stream of a diesel engine.

## Patentansprüche

1. Geschichteter Dieseloxidationskatalysator (DOC), umfassend:
a) ein Trägersubstrat;
b) ein dieseloxidationskatalytisches Material umfassend
b1) eine erste Schicht, die auf dem Trägersubstrat angeordnet ist, wobei die erste Schicht Palladium, das auf ein Trägermaterial, das Cerdioxid umfasst, imprägniert ist, in einer Menge von wenigstens 65 Gew.-%, bezogen auf das Gesamtgewicht des Trägermaterials, umfasst und gegebenenfalls Platin umfasst;
b2) eine zweite Schicht, die auf der ersten Schicht angeordnet ist, wobei die zweite Schicht Palladium und Platin, die jeweils auf ein Trägermaterial, das ein Metalloxid umfasst, imprägniert sind, umfasst;
wobei das Gewichtsverhältnis von Platin zu Palladium der zweiten Schicht in dem Bereich von 10 : 1 bis 1,5 : 1 liegt;
wobei das Gewichtsverhältnis von Platin zu Palladium der ersten Schicht kleiner als das Gewichtsverhältnis von Platin zu Palladium der zweiten Schicht ist.

2. Geschichteter Dieseloxidationskatalysator gemäß Anspruch 1, wobei das Gewichtsverhältnis von Platin zu Palladium der ersten Schicht in dem Bereich von 0 : 1 bis 1,1 : 1 liegt.

3. Geschichteter Dieseloxidationskatalysator gemäß Anspruch 1 oder 2, wobei das Gewichtsverhältnis von Platin zu Palladium der zweiten Schicht in dem Bereich von 5 : 1 bis 2 : 1 liegt, bevorzugt ein Verhältnis von 2 : 1 aufweist.

4. Geschichteter Dieseloxidationskatalysator gemäß einem der Ansprüche 1 bis 3, wobei das Verhältnis des Gewichtsverhältnisses von Platin zu Palladium der ersten Schicht zu dem Gewichtsverhältnis von Platin zu Palladium der ersten Schicht kleiner als oder gleich 0,9 ist.

5. Geschichteter Dieseloxidationskatalysator gemäß einem der Ansprüche 1 der ersten bis 4, wobei das Trägermaterial der ersten Schicht Cerdioxid in einer Menge von wenigstens 85 Gew.-% , bevorzugter wenigstens 95 Gew.-%, bezogen auf das Gesamtgewicht des Trägermaterials, umfasst.

6. Geschichteter Dieseloxidationskatalysator gemäß einem der Ansprüche 1 bis 5, wobei das Trägermaterial der ersten Schicht ferner Zirkoniumdioxid und/oder Aluminiumoxid umfasst.

7. Geschichteter Dieseloxidationskatalysator gemäß einem der Ansprüche 1 bis 6, wobei das Trägermaterial der ersten Schicht ferner einen Modifikator ausgewählt aus der Gruppe bestehend aus La₂O₃, Pr₆O₁₁, HfO₂, Y₂O₃, Yb₂O₃, YbO, Nd₂O₃, NdO, WO₃, SiO₂, TiO₂ und Kombinationen von zwei oder mehr davon umfasst.

8. Geschichteter Dieseloxidationskatalysator gemäß einem der Ansprüche 1 bis 7, wobei das Trägermaterial der zweiten Schicht ein Metalloxid ausgewählt aus der Gruppe bestehend aus Aluminiumoxid, Zirkoniumdioxid, Siliciumdioxid, Titandioxid, Siliciumdioxid-Aluminiumoxid, Aluminiumoxid-Zirkoniumdioxid, Titandioxid-Siliciumdioxid, Titandioxid-Zirkoniumdioxid, Titandioxid-Aluminiumoxid und Kombinationen von zwei oder mehr davon umfasst.

9. Geschichteter Dieseloxidationskatalysator gemäß einem der Ansprüche 1 bis 8, wobei die zweite Schicht einen Cerdioxidgehalt von nicht mehr als 5 Gew.-%, vorzugsweise nicht mehr als 1 Gew.-%, bevorzugter nicht mehr als 0,1 Gew.-%, aufweist.

10. Geschichteter Dieseloxidationskatalysator gemäß einem der Ansprüche 1 bis 9, wobei die erste Schicht Palladium in einer Menge von 0,2 bis 2,1 g/l (6 bis 60 g/ft³) umfasst.

11. Geschichteter Dieseloxidationskatalysator gemäß einem der Ansprüche 1 bis 10, wobei die erste Schicht Platin in einer Menge von 0,5 bis 1,4 g/l (15 bis 40 g/ft³) umfasst.

12. Geschichteter Dieseloxidationskatalysator gemäß einem der Ansprüche 1 bis 11, wobei die zweite Schicht Platin und Palladium in einer Gesamtmenge von 1,06 bis 6,36 g/l (30 bis 180 g/ft³) umfasst.

13. Geschichteter Dieseloxidationskatalysator gemäß einem der Ansprüche 1 bis 12, wobei das dieseloxidationskatalytische Material Platin und Palladium in einer Gesamtmenge von 1,06 bis 8,48 g/l (30 bis 240 g/ft3 ) umfasst.

14. Geschichteter Dieseloxidationskatalysator gemäß einem der Ansprüche 1 bis 13, wobei die zweite Schicht ferner eine Kohlenwasserstoffspeicherverbindung, vorzugsweise einen Zeolithen, umfasst.

15. Geschichteter Dieseloxidationskatalysator gemäß einem der Ansprüche 1 bis 14, ferner umfassend eine Unterschicht, die zwischen dem Trägersubstrat und der ersten Schicht angeordnet ist.

16. Geschichteter Dieseloxidationskatalysator gemäß Anspruch 15, wobei die Unterschicht Aluminiumoxid umfasst.

17. Geschichteter Dieseloxidationskatalysator gemäß einem der Ansprüche 1 bis 16, wobei das Trägersubstrat ein Durchstromsubstrat oder ein Wandstromsubstrat ist.

18. Geschichteter Dieseloxidationskatalysator gemäß einem der Ansprüche 1 bis 17, wobei das Trägersubstrat ein Material ausgewählt aus der Gruppe bestehend aus Cordierit, Cordierit-Aluminiumoxid, Siliciumnitrid, Siliciumcarbid, Zirkoniummullit, Spodumen, Aluminiumoxid-Siliciumdioxid-Magnesiumoxid, Zirkoniumsilicat, Sillimanit, Magnesiumsilicat, Zirkonium, Petalit, Aluminiumoxid, Alumosilicat und Kombinationen von zwei oder mehr davon umfasst.

19. Geschichteter Dieseloxidationskatalysator gemäß einem der Ansprüche 1 bis 18, ferner umfassend
b3) eine dritte Schicht, die auf der zweiten Schicht angeordnet ist, wobei die dritte Schicht Palladium, das auf ein Trägermaterial, das Cerdioxid umfasst, imprägniert ist, in einer Menge von wenigstens 45 Gew.-%, bezogen auf das Gesamtgewicht des Trägermaterials, umfasst und gegebenenfalls Platin umfasst,
wobei das Gewichtsverhältnis von Platin zu Palladium der dritten Schicht kleiner als das Gewichtsverhältnis von Platin zu Palladium der zweiten Schicht ist.

20. Geschichteter Dieseloxidationskatalysator gemäß Anspruch 19, wobei das Verhältnis des Gewichtsverhältnisses von Platin zu Palladium der dritten Schicht zu dem Gewichtsverhältnis von Platin zu Palladium der zweiten Schicht kleiner als oder gleich 0,9 ist.

21. Geschichteter Dieseloxidationskatalysator gemäß Anspruch 19 oder 20, wobei das Trägermaterial der dritten Schicht Cerdioxid in einer Menge von wenigstens 65 Gew.-%, vorzugsweise wenigstens 85 Gew.-% , bevorzugter wenigstens 95 Gew.-%, bezogen auf das Gesamtgewicht des Trägermaterials, umfasst.

22. Geschichteter Dieseloxidationskatalysator gemäß einem der Ansprüche 19 bis 21, wobei das Trägermaterial der dritten Schicht ferner Zirkoniumdioxid und/oder Aluminiumoxid umfasst.

23. Geschichteter Dieseloxidationskatalysator gemäß einem der Ansprüche 19 bis 22, wobei das Trägermaterial der dritten Schicht ferner einen Modifikator ausgewählt aus der Gruppe bestehend aus La₂O₃, Pr₆O₁₁, HfO₂, Y₂O₃, Yb₂O₃, YbO, Nd₂O₃, NdO, WO₃, SiO₂, TiO₂ und Kombinationen von zwei oder mehr davon umfasst.

24. Geschichteter Dieseloxidationskatalysator gemäß einem der Ansprüche 19 bis 23, wobei die dritte Schicht Palladium in einer Menge von 0,07 bis 1,06 g/l (2 bis 30 g/ft³) umfasst.

25. Geschichteter Dieseloxidationskatalysator gemäß einem der Ansprüche 19 bis 24, wobei die dritte Schicht Platin in einer Menge von 0,14 bis 0,56 g/l (4 bis 16 g/ft³) umfasst.

26. Geschichteter Dieseloxidationskatalysator gemäß einem der Ansprüche 19 bis 25, wobei die dritte Schicht ferner eine Kohlenwasserstoffspeicherverbindung, vorzugsweise einen Zeolithen, umfasst.

27. Geschichteter Dieseloxidationskatalysator gemäß einem der Ansprüche 1 bis 26, enthalten in einem System zur Behandlung eines Abgasstroms eines Dieselmotors, wobei das System ferner umfasst:
eine Abgasleitung, die über einen Abgasverteiler in Fluidverbindung mit dem Dieselmotor steht, und eines oder mehrere der folgenden in Fluidverbindung mit dem geschichteten Dieseloxidationskatalysator-Verbundmaterial: einen katalysierten Rußfilter (CSF), ein Element zur selektiven katalytischen Reduktion (SCR), ein katalytisches Element zur NOx-Speicherung und -Reduktion (NSR).

28. Verfahren zur Herstellung des geschichteten Dieseloxidationskatalysators gemäß einem Der Ansprüche 1 bis 26, umfassend die Schritte
(i) Bereitstellen eines Trägersubstrats;
(ii) gegebenenfalls Aufbringen einer Unterschicht auf das Trägersubstrat;
(iii) Aufbringen einer ersten Schicht auf das Trägersubstrat oder die Unterschicht, wobei die erste Schicht Palladium, das auf ein Trägermaterial, das Cerdioxid umfasst, imprägniert ist, in einer Menge von wenigstens 65 Gew.-%, bezogen auf das Gesamtgewicht des Trägermaterials, umfasst und gegebenenfalls Platin umfasst;
(iv) Aufbringen einer zweiten Schicht auf die erste Schicht, wobei die zweite Schicht Palladium und Platin, die jeweils auf ein Trägermaterial, das ein Metalloxid umfasst, imprägniert sind, umfasst;
wobei das Gewichtsverhältnis von Platin zu Palladium der ersten Schicht kleiner als das Gewichtsverhältnis von Platin zu Palladium der zweiten Schicht ist;
(v) gegebenenfalls Aufbringen einer dritten Schicht auf die zweite Schicht, wobei die dritte Schicht Palladium, das auf ein Trägermaterial, das Cerdioxid umfasst, imprägniert ist, in einer Menge von wenigstens 45 Gew.-%, bezogen auf das Gesamtgewicht des Trägermaterials, umfasst und gegebenenfalls Platin umfasst,
wobei das Gewichtsverhältnis von Platin zu Palladium der dritten Schicht kleiner als das Gewichtsverhältnis von Platin zu Palladium der zweiten Schicht ist.

29. System zur Behandlung eines Abgasstroms eines Dieselmotors, wobei das System umfasst:
eine Abgasleitung, die über einen Abgasverteiler in Fluidverbindung mit dem Dieselmotor steht, den geschichteten Dieseloxidationskatalysator gemäß einem der Ansprüche 1 bis 26, wobei das Trägersubstrat ein Wandstromsubstrat oder ein Durchstromsubstrat ist, und
eines oder mehrere der folgenden in Fluidverbindung mit dem geschichteten Dieseloxidationskatalysator-Verbundmaterial: einen katalysierten Rußfilter (CSF), ein Element zur selektiven katalytischen Reduktion (SCR), ein katalytisches Element zur NOx-Speicherung und -Reduktion (NSR) .

30. System gemäß Anspruch 29, umfassend einen katalysierten Rußfilter, wobei der geschichtete Dieseloxidationskatalysator stromaufwärts bezogen auf den katalysierten Rußfilter angeordnet ist.

31. Verwendung des geschichteten Dieseloxidationskatalysators gemäß einem der Ansprüche 1 bis 26 zur Behandlung eines Abgasstroms eines Dieselmotors.

## Revendications

1. Catalyseur d'oxydation diesel (DOC) stratifié comprenant :
a) un substrat de support;
b) un matériau catalytique d'oxydation diesel comprenant
b1) une première couche située sur le substrat de support, la première couche comprenant du palladium imprégné sur un matériau de support comprenant de l'oxyde de cérium dans une quantité d'au moins 65 % en poids, rapporté au poids total du matériau de support, et comprenant éventuellement du platine;
b2) une deuxième couche située sur la première couche, la deuxième couche comprenant du palladium et du platine, chacun imprégné sur un matériau de support comprenant un oxyde métallique;
dans lequel le rapport pondéral entre platine et palladium de la deuxième couche se situe dans la gamme de 10 : 1 à 1,5 : 1;
dans lequel le rapport pondéral entre platine et palladium de la première couche est inférieur au rapport pondéral entre platine et palladium de la deuxième couche.

2. Catalyseur d' oxydation diesel stratifié selon la revendication 1, dans lequel le rapport pondéral entre platine et palladium de la première couche se situe dans la gamme de 0 : 1 à 1,1 : 1.

3. Catalyseur d'oxydation diesel stratifié selon la revendication 1 ou 2, dans lequel le rapport pondéral entre platine et palladium de la deuxième couche se situe dans la gamme de 5 : 1 à 2 : 1, idéalement dans un rapport de 2 : 1.

4. Catalyseur d'oxydation diesel stratifié selon l'une quelconque des revendications 1 à 3, dans lequel le rapport du rapport pondéral entre platine et palladium de la première couche au rapport pondéral entre platine et palladium de la deuxième couche est inférieur ou égal à 0,9.

5. Catalyseur d'oxydation diesel stratifié selon l'une quelconque des revendications 1 à 4, dans lequel le matériau de support de la première couche comprend de l'oxyde de cérium dans une quantité d'au moins 85 % en poids, mieux encore au moins 95 % en poids, rapporté au poids total du matériau de support.

6. Catalyseur d'oxydation diesel stratifié selon l'une quelconque des revendications 1 à 5, dans lequel le matériau de support de la première couche comprend en outre de la zircone et/ou de l'alumine.

7. Catalyseur d'oxydation diesel stratifié selon l'une quelconque des revendications 1 à 6, dans lequel le matériau de support de la première couche comprend en outre un modificateur choisi dans le groupe constitué par La₂O₃, Pr₆O₁₁, HfO₂, Y₂O₃, Yb₂O₃, YbO, Nd₂O₃, NdO, WO₃, SiO₂, TiO₂ et les combinaisons d'au moins deux d'entre eux.

8. Catalyseur d'oxydation diesel stratifié selon l'une quelconque des revendications 1 à 7, dans lequel le matériau de support de la deuxième couche comprend un oxyde métallique choisi dans le groupe constitué par l'alumine, la zircone, la silice, le dioxyde de titane, la silice-alumine, l'alumine-zircone, le dioxyde de titane-silice, le dioxyde de titane-zircone, le dioxyde de titane-alumine, et les combinaisons d'au moins deux d'entre eux.

9. Catalyseur d'oxydation diesel stratifié selon l'une quelconque des revendications 1 à 8, dans lequel la deuxième couche a une teneur en oxyde de cérium ne dépassant pas 5 % en poids, de préférence ne dépassant pas 1 % en poids, mieux encore ne dépassant pas 0,1 % en poids.

10. Catalyseur d'oxydation diesel stratifié selon l'un quelconque des revendications 1 à 9, dans lequel la première couche comprend du palladium dans une quantité de 0,2 à 2,1 g/L (6 à 60 g/ft³).

11. Catalyseur d'oxydation diesel stratifie selon l'une quelconque des revendications 1 à 10, dans lequel la première couche comprend du platine dans une quantité de 0,5 à 1,4 g/L (15 à 40 g/ft³).

12. Catalyseur d'oxydation diesel stratifié selon l'une quelconque des revendications 1 à 11, dans lequel la deuxième couche comprend du platine et du palladium dans une quantité totale de 1,06 à 6,36 g/L (30 à 180 g/ft³).

13. Catalyseur d'oxydation diesel stratifié selon l'une quelconque des revendications 1 à 12, dans lequel le matériau catalytique d'oxydation diesel comprend du platine et du palladium dans une quantité totale de 1,06 à 8,48 g/L (30 à 240 g/ft³).

14. Catalyseur d'oxydation diesel stratifié selon l'une quelconque des revendications 1 à 13, dans lequel la deuxième couche comprend en outre un composé de stockage d'hydrocarbures, de préférence une zéolithe.

15. Catalyseur d'oxydation diesel stratifié selon l'une quelconque des revendications 1 à 14, comprenant en outre une couche de fond située entre le substrat de support et la première couche.

16. Catalyseur d' oxydation diesel stratifié selon la revendication 15, dans lequel la couche de fond comprend de l'alumine.

17. Catalyseur d'oxydation diesel stratifié selon l'une quelconque des revendications 1 à 16, dans lequel le substrat de support est un substrat à écoulement continu ou un substrat à écoulement par les parois.

18. Catalyseur d'oxydation diesel stratifié selon l'une quelconque des revendications 1 à 17, dans lequel le substrat de support comprend un matériau choisi dans le groupe constitué par la cordiérite, la cordiérite-alumine, le nitrure de silicium, le carbure de silicium, la mullite de zircon, le spodumène, l'alumine-silice-magnésie, le silicate de zircon, la sillimanite, le silicate de magnésium, le zircon, la pétalite, l'alumine, l'aluminosilicate et les combinaisons d'au moins deux d'entre eux.

19. Catalyseur d'oxydation diesel stratifié selon l'une quelconque des revendications 1 à 18, comprenant en outre
b3) une troisième couche située sur la deuxième couche, la troisième couche comprenant du palladium imprégné sur un matériau de support comprenant de l' oxyde de cérium dans une quantité d'au moins 45 % en poids, rapporté au poids total du matériau de support, et comprenant éventuellement du platine,
dans lequel le rapport pondéral entre platine et palladium de la troisième couche est inférieur au rapport pondéral entre platine et palladium de la deuxième couche.

20. Catalyseur d' oxydation diesel stratifié selon la revendication 19, dans lequel le rapport du rapport pondéral entre platine et palladium de la troisième couche au rapport pondéral entre platine et palladium de la deuxième couche est inférieur ou égal à 0,9.

21. Catalyseur d' oxydation diesel stratifié selon la revendication 19 ou 20, dans lequel le matériau de support de la troisième couche comprend de l'oxyde de cérium dans une quantité d'au moins 65 % en poids, de préférence au moins 85 % en poids, mieux encore au moins 95 % en poids, rapporté au poids total du matériau de support.

22. Catalyseur d'oxydation diesel stratifié selon l'une quelconque des revendications 19 à 21, dans lequel le matériau de support de la troisième couche comprend en outre de la zircone et/ou de l'alumine.

23. Catalyseur d'oxydation diesel stratifié selon l'une quelconque des revendications 19 à 22, dans lequel le matériau de support de la troisième couche comprend en outre un modificateur choisi dans le groupe constitué par La₂O₃, Pr₆O₁₁, HfO₂, Y₂O₃, Yb₂O₃, YbO, Nd₂O₃, NdO, WO₃, SiO₂, TiO₂ et les combinaisons d'au moins deux d'entre eux.

24. Catalyseur d'oxydation diesel stratifié selon l'une quelconque des revendications 19 à 23, dans lequel la troisième couche comprend du palladium dans une quantité de 0,07 à 1,06 g/L (2 à 30 g/ft³).

25. Catalyseur d'oxydation diesel stratifié selon l'une quelconque des revendications 19 à 24, dans lequel la troisième couche comprend du platine dans une quantité de 0,14 à 0,56 g/L (4 à 16 g/ft³).

26. Catalyseur d'oxydation diesel stratifié selon l'une quelconque des revendications 19 à 25, dans lequel la troisième couche comprend en outre un composé de stockage d'hydrocarbures, de préférence une zéolithe.

27. Catalyseur d'oxydation diesel stratifié selon l'une quelconque des revendications 1 à 26 compris dans un système destiné à traiter un courant d'échappement gazeux d'un moteur diesel, le système comprenant en outre :
une conduite d'échappement en communication fluidique avec le moteur diesel par le biais d'un collecteur d'échappement, et
un ou plusieurs des éléments suivants en communication fluidique avec le composite catalyseur d'oxydation diesel stratifié: un filtre à suie catalysé (CSF), un article de réduction catalytique sélective (SCR), un article catalytique de stockage et réduction des NOx (NSR).

28. Procédé de préparation du catalyseur d'oxydation diesel stratifié selon l'une quelconque des revendications 1 à 26, comprenant les étapes consistant à:
(i) se procurer un substrat de support;
(ii) appliquer éventuellement une couche de fond sur le substrat de support;
(iii) appliquer une première couche sur le substrat de support ou la couche de fond, la première couche comprenant du palladium imprégné sur un matériau de support comprenant de l'oxyde de cérium dans une quantité d'au moins 65 % en poids, rapporté au poids total du matériau de support, et comprenant éventuellement du platine;
(iv) appliquer une deuxième couche sur la première couche, la deuxième couche comprenant du palladium et du platine, chacun imprégné sur un matériau de support comprenant un oxyde métallique,
le rapport pondéral entre platine et palladium de la première couche étant inférieur au rapport pondéral entre platine et palladium de la deuxième couche ;
(v) appliquer éventuellement une troisième couche sur la deuxième couche, la troisième couche comprenant du palladium imprégné sur un matériau de support comprenant de l'oxyde de cérium dans une quantité d'au moins 45 % en poids, rapporté au poids total du matériau de support, et comprenant éventuellement du platine,
le rapport pondéral entre platine et palladium de la troisième couche étant inférieur au rapport pondéral entre platine et palladium de la deuxième couche.

29. Système destiné à traiter un courant d'échappement gazeux d'un moteur diesel, le système comprenant :
une conduite d'échappement en communication fluidique avec le moteur diesel par le biais d'un collecteur d'échappement,
le catalyseur d'oxydation diesel stratifié selon l'une quelconque des revendications 1 à 26, dans lequel le substrat de support est un substrat à écoulement par les parois ou un substrat à écoulement continu, et
un ou plusieurs des éléments suivants en communication fluidique avec le composite catalyseur d'oxydation diesel stratifié: un filtre à suie catalysé (CSF), un article de réduction catalytique sélective (SCR), un article catalytique de stockage et réduction des NOx (NSR).

30. Système selon la revendication 29 comprenant un filtre à suie catalysé, le catalyseur d'oxydation diesel stratifié étant situé en amont du filtre à suie catalysé.

31. Utilisation du catalyseur d'oxydation diesel stratifié selon l'une quelconque des revendications 1 à 26 pour le traitement d'un courant d'échappement gazeux d'un moteur diesel.
